# EUROPEAN PATENT APPLICATION

(11) **EP 2 186 400 A2**
(43) Date of publication of application: **19.05.2010**
(21) Application number: 09394032.8
(22) Date of filing: 06.11.2009
(51) Int. Cl.: A01K 7/04

(54) **A drink bowl**

(30) Priority: 06.11.2008 IE 20080889
(71) Applicant: Rodicon Limited, Tuam Galway (IE)
(72) Inventor: Concannon, John Francis, County Galway (IE); Dunleavy, Sean Gerard, County Galway (IE); Concannon, Colin Pio, County Galway (IE)
(74) Representative: Gorman, Francis Fergus

(57) **Abstract**

A drink bowl (1) for an animal is suitable for mounting on a wall of an animal house and comprises a base (2), a pair of side walls (6) joined by a front end wall (7) and a rear end wall (8), all of which extend generally upwardly from the base (2) and define with the base (2) an interior region (4). An outlet port (14) formed by a communicating bore (15) extends through the base (2) for draining the interior region (4). A bung (19) which is coupled to a mounting pillar (21) extending downwardly from the base (3) by a resilient coupling member (20) is releasably and sealably engageable with the communicating bore (15) for closing the communicating bore (15). The bung (19) is urgeable upwardly into the communicating bore (15) from a downstream end (18) exterior of the bowl (1) towards an upstream end (17) adjacent the interior region (4) of the bowl (1). Thus, the bung (19) cannot be displaced from the communicating bore (15) into the interior region (5) by an animal drinking from the drink bowl (1).

## Description

The present invention relates to a drink bowl, and in particular, to a drink bowl of the type used for providing drinking water to an animal. The invention also relates to a method for sealably closing an outlet port from a drink bowl.

Such drink bowls are known, and typically, are adapted to receive a drinking water supply which typically, is supplied to the drink bowl through a float controlled valve. In general, such drink bowls define an interior region within which the drinking water is contained and which is accessible to an animal through an upwardly facing open mouth. An outlet port for draining water from the drink bowl during cleaning thereof, in general, is located in a base of the drink bowl. A bung closes the outlet port. In prior art drink bowls, the bung is engageable with the outlet port from the interior region of the drink bowl by urging the bung downwardly into the outlet port.

A problem with such drink bowls known heretofore is that the bung is commonly displaced from the outlet port by an animal drinking from the drink bowl. An animal, such as a cow, a calf or any other animal drinking from the drink bowl tends to urge the water from the drink bowl into its mouth by its tongue. This requires a licking type action to be carried out by the animal. The licking action of the tongue acting on the bung displaces the bung from the outlet port into the interior region of the drink bowl. This results in the drinking water draining from the drink bowl through the outlet port. Indeed, where such drink bowls are supplied with a drinking water supply through a float controlled valve, once the bung has been displaced from the outlet port, the valve remains in an open state. Thus water continuously flows through the drink bowl and in turn through the outlet port to waste. This is particularly wasteful of water, and furthermore, with the bung displaced from the outlet port, drinking water no longer accumulates in the drink bowl, and is thus no longer available to the animal. This is undesirable.

There is therefore a need for a drink bowl which addresses this problem of known drink bowls.

The invention is directed towards providing a drink bowl which addresses the problem of known drink bowls, and the invention is also directed towards providing a method for sealably closing an outlet port from a drink bowl.

According to the invention there is provided a drink bowl having an outlet port for draining liquid therefrom, the outlet port being formed by a communicating bore extending through the bowl from an upstream end adjacent an interior of the bowl to a downstream end adjacent the exterior thereof, a bung for sealably closing the communicating bore, the bung being urgeable inwardly into the communicating bore from the exterior of the bowl in a direction from the downstream end towards the upstream end and being releasably and sealably engageable with the communicating bore, the bung being disengageable from the communicating bore by urging the bung outwardly therefrom towards the exterior of the bowl in a direction from the upstream end towards the downstream end, and a coupling means coupling the bung to the exterior of the bowl for facilitating engagement and disengagement of the bung with and from the communicating bore.

In one embodiment of the invention the coupling means constrains the bung to move between an engaged position with the bung sealably engaged in the communicating bore and a disengaged position with the bung disengaged from the communicating bore.

Preferably, the coupling means maintains the bung in alignment with the communicating bore as the bung is being urged between the disengaged position and the engaged position.

In one embodiment of the invention the coupling means comprises a resilient coupling member, and preferably, the coupling means comprises an elongated coupling member. Advantageously, the coupling means extends radially from the bung, and preferably, the coupling means extends from the bung adjacent the proximal end thereof.

In one embodiment of the invention the coupling means is secured to the bowl adjacent to but spaced apart from the communicating bore, and preferably, a mounting means is provided for mounting the coupling means to the drink bowl, and advantageously, the mounting means is located on the exterior of the bowl. Ideally, the mounting means is spaced apart from the communicating bore.

In another embodiment of the invention a grip means extends from the bung exteriorly of the bowl for facilitating manual disengagement of the bung from the communicating bore. Preferably, the grip means is adapted for facilitating manual urging of the bung into engagement with the communicating bore. Advantageously, the grip means comprises a grip tab configured for gripping between a finger and thumb of one hand of an individual. Advantageously, the grip means extends radially from the bung, and ideally, the grip means extends from the bung adjacent the proximal end thereof.

Preferably, the bung comprises a resilient material, and advantageously, the bung comprises a resiliently deformable material, and ideally, the bung is deformable on engagement with the communicating bore for facilitating sealable engagement therewith.

In one embodiment of the invention the bung terminates in a distal tapered lead-in for facilitating entry of the bung into the communicating bore. Preferably, the bung tapers towards the proximal end thereof to define with the distal tapered lead-in an intermediate portion intermediate the distal tapered lead-in and the tapered proximal end of transverse cross-sectional area greater than the minimum transverse cross-sectional area of the distal tapered lead-in and the tapered proximal end.

Advantageously, the distal tapered lead-in and the tapered proximal end extend from each other to define the intermediate portion of the bung as a ridge extending circumferentially around the bung intermediate the distal tapered lead-in and the tapered proximal end. Ideally, the ridge defined by the distal tapered lead-in and the tapered proximal end is resiliently deformable for sealably engaging the communicating bore.

In one embodiment of the invention the bung is of circular transverse cross-section.

In another embodiment of the invention the communicating bore is of circular transverse cross-section.

In another embodiment of the invention the communicating bore is cylindrical. Alternatively, the communicating bore tapers inwardly from the downstream end adjacent the exterior of the bowl towards the upstream end adjacent the interior of the bowl.

In one embodiment of the invention the bowl comprises a base, and preferably, a wall extends around and in a generally upwardly direction from the base to define with the base the interior of the bowl. Preferably, the wall comprises a pair of spaced apart side walls extending along respective opposite sides of the base, a front end wall extending along a front end of the base between the side walls, and a rear end wall extending along a rear end of the base between the side walls. Advantageously, the rear end wall extends in a generally upwardly direction from the base.

Preferably, the rear end wall is adapted for mounting the bowl on a support structure. Advantageously, the rear end wall is adapted for mounting the bowl on a wall of an animal house.

Preferably, the side walls and the front end wall extend in a generally outwardly upwardly direction from the base.

Ideally, the communicating bore extends through the base.

In another embodiment of the invention the drink bowl is configured for receiving a water supply. Preferably, the drink bowl comprises a valve for accommodating the water supply into the drink bowl. Advantageously, the valve is a float controlled valve.

In another embodiment of the invention a partition element is provided for partitioning the interior of the drink bowl into a drinking compartment and an inlet compartment, the partition element permitting communication between the drinking compartment and the inlet compartment. Advantageously, a cover element is provided for covering the inlet compartment. Preferably, the cover element extends from the partition element adjacent a top thereof, the partition element and the cover element co-operating with the drink bowl for concealing the float controlled valve within the inlet compartment. Advantageously, the cover element is releasably engageable with the bowl.

In another embodiment of the invention the partition element is releasably engageable with the bowl.

Advantageously, the valve is adapted for mounting in the side wall of the bowl.

In one embodiment of the invention the bowl is configured to provide drinking water to an animal.

In another embodiment of the invention the bowl is configured to provide drinking water to cattle or cows.

In a further embodiment of the invention the bowl is configured to provide drinking water to calves.

The invention also provides a method for releasably and sealably closing an outlet port from a drink bowl, the outlet port being formed by a communicating bore extending through the bowl between an upstream end adjacent an interior of the bowl to a downstream end adjacent an exterior of the bowl, the method comprising coupling a bung to the bowl adjacent the exterior thereof, and entering a bung into the communicating bore at the downstream end thereof adjacent the exterior of the bowl, and urging the bung into the communicating bore in a direction from the downstream end towards the upstream end until the bung sealably and releasably engages the communicating bore.

In one embodiment of the invention the coupling means is adapted to constrain the bung to move between an engaged position with the bung sealably engaged in the communicating bore and a disengaged position with the bung disengaged from the communicating bore. Preferably, the coupling means is adapted to maintain the bung in alignment with the communicating bore as the bung is being urged between the disengaged position and the engaged position.

The invention will be more clearly understood from the following description of a preferred embodiment thereof, which is given by way of example only, with reference to the accompanying drawings, in which:

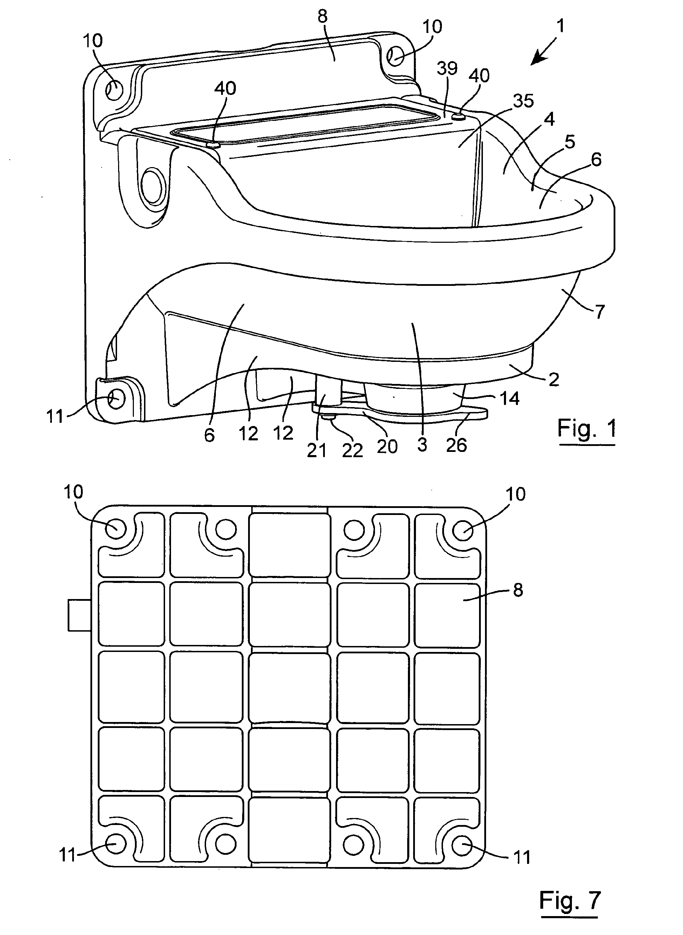

Fig. 1 is a perspective view of a drink bowl according to the invention,

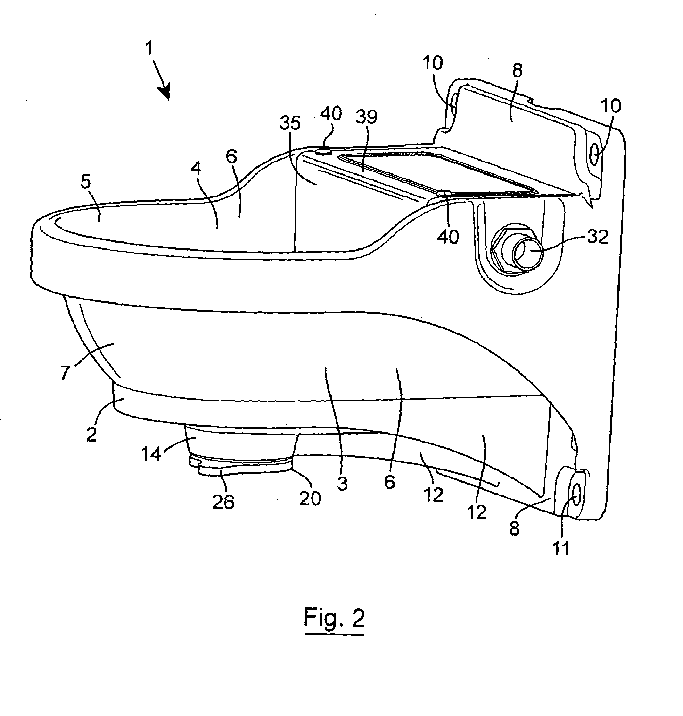

Fig. 2 is another perspective view of the drink bowl of Fig. 1,
Fig. 3 is a front elevational view of the drink bowl of Fig. 1,

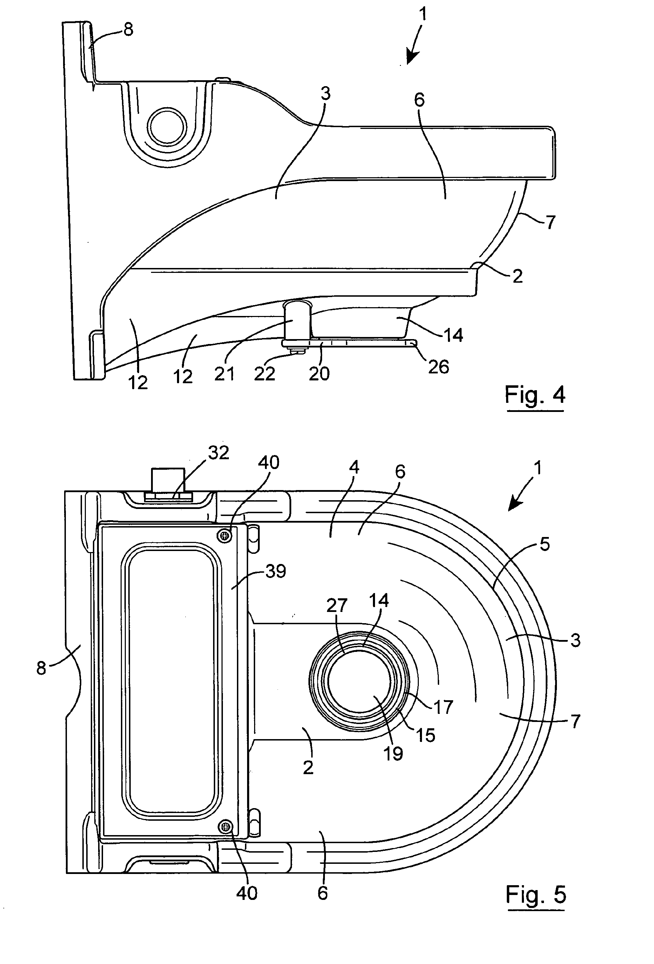

Fig. 4 is a side elevational view of the drink bowl of Fig. 1,
Fig. 5 is a top plan view of the drink bowl of Fig. 1,
Fig. 6 is another top plan view of the drink bowl of Fig. 1,
Fig. 7 is a rear end elevational view of the drink bowl of Fig. 1,
Fig. 8 is a transverse cross-sectional side elevational view of the drink bowl of Fig. 1 on the line VIII-VIII of Fig. 3,
Fig. 9 is a transverse cross-sectional oblique elevational view of the drink bowl of Fig. 1 on the line IX-IX of Fig. 6,

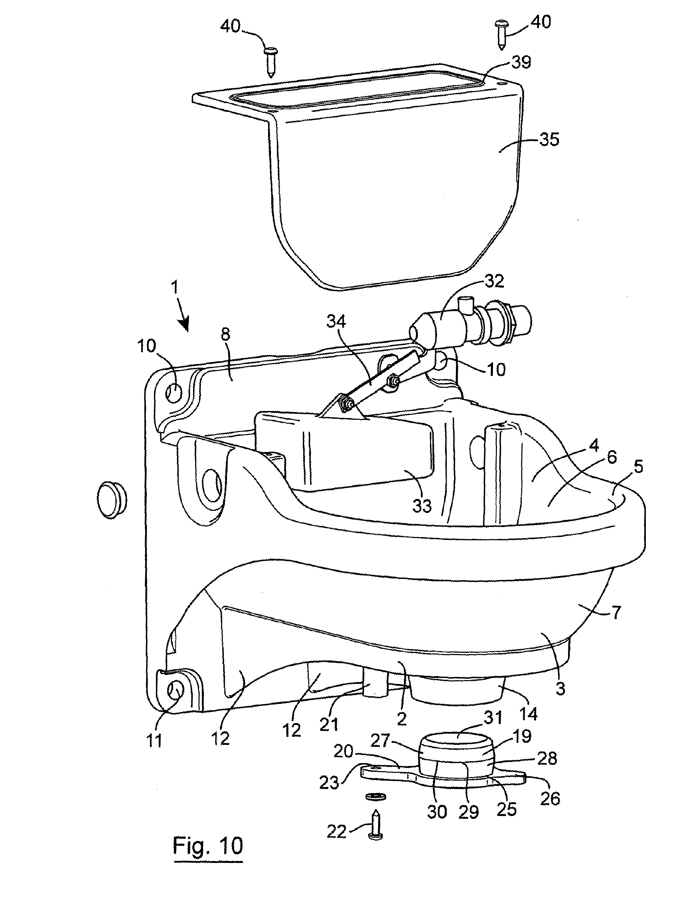

Fig. 10 is an exploded perspective view of the drink bowl of Fig. 1,

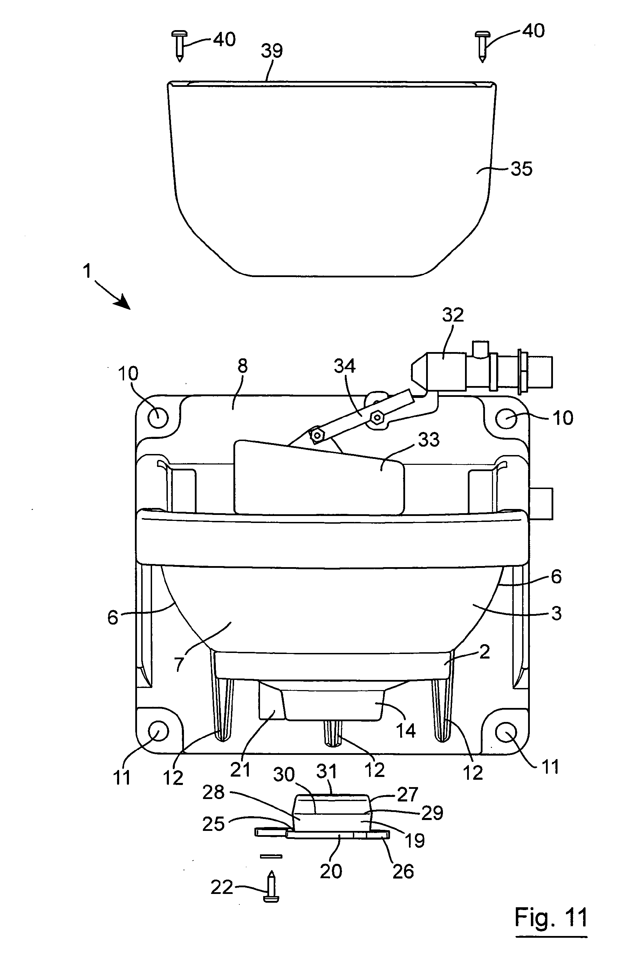

Fig. 11 is an exploded front elevational view of the drink bowl of Fig. 1, and
Fig. 12 is an exploded side elevational view of the drink bowl of Fig. 1.

Referring to the drawings, there is illustrated a drink bowl according to the invention, indicated generally by the reference numeral 1, which is particularly suitable for providing drinking water from a water supply to an animal, for example, cattle. Additionally, the drink bowl 1 is particularly suitable for mounting on a structure, for example, a wall of an animal house. The drink bowl 1 comprises a base 2 and a wall 3 extending around the base 2 and extending from the base 2 in a generally upwardly direction from the base 2 to define with the base 2 an interior region 4 of the bowl 1 for containing drinking water. The wall 3 defines an upwardly facing open mouth 5 to the interior region 4 for accommodating a muzzle of an animal into the interior region 4. The wall 3 comprises a pair of spaced apart side walls 6 extending along opposite sides of the base 2 and outwardly and upwardly of the base 2. A front end wall 7 of the wall 3 extends along a front end of the base 2 and extends outwardly and upwardly of the base 2 and joins the side walls 6. The wall 3 is completed by a rear end wall 8 which extends along a rear end of the base 2 and upwardly from the base 2 and joins the side walls 6 adjacent the rear of the bowl 1. The rear end wall 8 also extends downwardly from the base 2 and is provided with two upper mounting holes 10 and two lower mounting holes 11 for facilitating securing the drink bowl 1 to a structure, such as a wall of an animal house. Webs 12 extending downwardly from the base 2 to the rear end wall 8 reinforce the base 2 to the rear end wall 8. The base 2, side walls 6, front end wall 7 and rear end wall 8 together define the interior region 4 for the drinking water.

An outlet port 14 formed by a cylindrical communicating bore 15 extends through the base 2 for draining water from the interior region 4. The communicating bore 15 extends from an upstream end 17 adjacent the interior region 4 of the bowl 1 to a downstream end 18 adjacent the exterior of the bowl 1. A bung 19 of circular transverse cross-section for releasably and sealably closing the communicating bore 15 is carried on a coupling means, namely, a resilient coupling member 20, which extends from a mounting means, namely, a mounting pillar 21 extending downwardly from the base 2 exteriorly of the bowl 1. A self-tapping screw 22 through a screw accommodating hole 23 in the coupling member 20 engages with a bore 24 in the mounting pillar 21 for securing the coupling member 20 thereto.

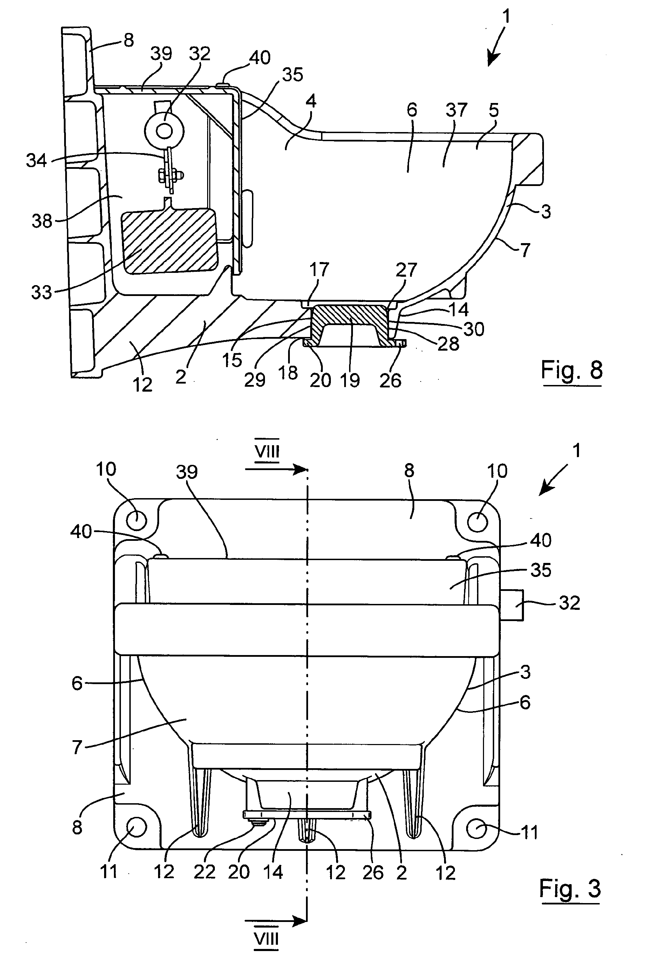

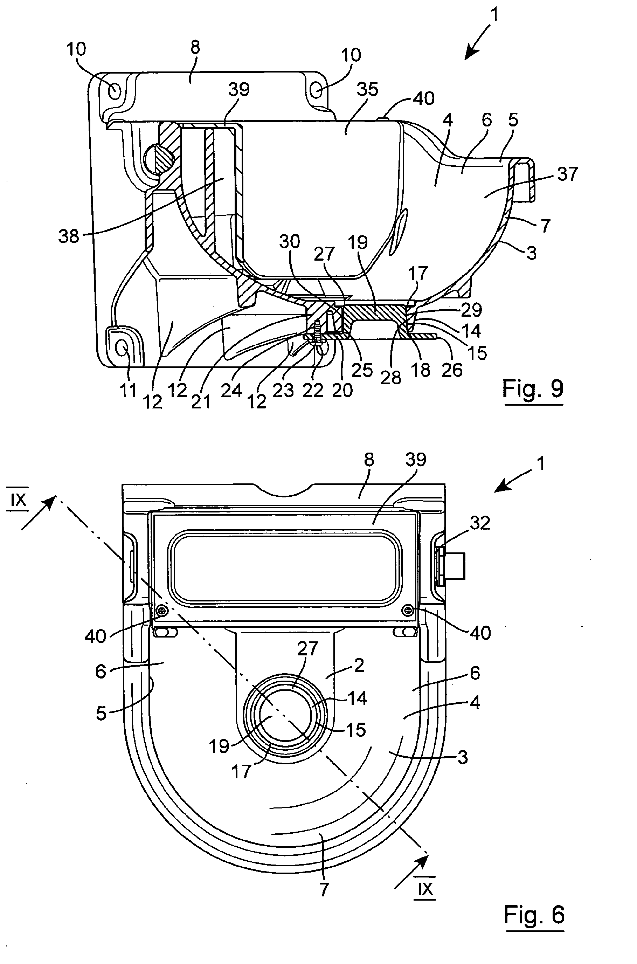

The coupling member 20 is of sufficient resilience to accommodate movement of the bung 19 between an engaged position illustrated in Figs. 3, 8 and 9 releasably and sealably engaged in the communicating bore 15 and a disengaged position (not shown) with the bung 19 disengaged from the communicating bore 15. The coupling member 20 maintains the bung 19 aligned with the coupling bore 15 as the bung 19 is being urged between the disengaged position and the engaged position. The coupling member 20 mounts the bung 19 exteriorly of the bowl 1 so that the bung 19 is urged into the engaged position in a direction from the downstream end 18 of the communicating bore 15 towards the upstream end 17. In other words, the bung 19 is urged into engagement with the communicating bore 15 from the exterior of the bowl 1 towards the interior region 4.

The bung 19 extends from a proximal end 25 to a distal end 31, and extends upwardly from the coupling member 20, so that the coupling member 20 effectively extends radially from the bung 19 adjacent the proximal end 25 of the bung 19 from one side thereof. The coupling member 20 extends beyond the bung 19 on the other side thereof and terminates in a grip means, namely, a grip tab 26 for urging the bung 19 between the engaged position and the disengaged position for sealably engaging and disengaging the bung 19 in and from, respectively, the communicating bore 15. The bung 19, the coupling member 20 and the grip tab 26 are integrally moulded of a rubber compound material of approximately 60 shore hardness, and thus are all resiliently deformable.

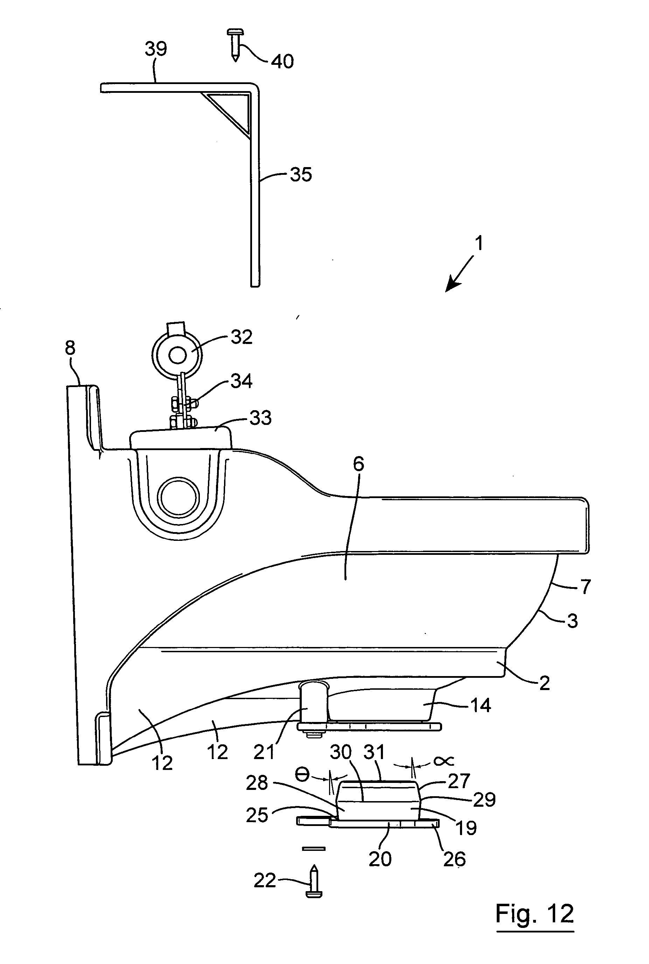

The bung 19 terminates in a distal tapered lead-in portion 27 adjacent the distal end 31 for facilitating entry of the bung 19 into the communicating bore 15. A proximal portion 28 of the bung 19 extending between the distal tapered lead-in portion 27 and the proximal end 25 tapers towards the proximal end 25 from the distal tapered lead-in portion 27 to the proximal end 25, and thereby defines with the distal tapered lead-in portion 27 an intermediate portion 29 formed by a circumferentially extending ridge 30, which extends circumferentially around the bung 19 intermediate the distal tapered lead-in portion 27 and the tapered proximal portion 28. The angle α at which the distal tapered lead-in portion 27 tapers inwardly is approximately 8°, see Fig. 12. The angle θ at which the tapered proximal portion 28 tapers inwardly is approximately 1° or 2°, see Fig. 12. The intermediate portion 29 formed by the ridge 30 is therefore of greater diameter than the minimum diameter of the distal tapered lead-in portion 27 and the minimum diameter of the tapered proximal portion 28.

The diameter of the intermediate portion 29 adjacent the ridge 30, and on respective opposite sides thereof adjacent the ridge 30 is of a diameter which is an interference fit in the communicating bore 15, to thereby releasably and sealably engage the communicating bore 15. In this embodiment of the invention the maximum diameter of the intermediate portion 29 adjacent the ridge 30 is approximately 0.5mm greater than the diameter of the communicating bore 15 to provide a suitable interference fit for effecting sealing between the bung 19 and the communicating bore 15, while at the same time permitting disengagement of the bung 19 from the communicating bore 15. It has been found that by providing such an interference fit between the intermediate portion 29 of the bung 19 and the communicating bore 15, when the bung 19 is engaged in the communicating bore 15 with the coupling member 20 substantially abutting the downstream end of the outlet port 14, the bung 19 forms a sealable secure fit in the communicating bore 15.

A valve means, in this embodiment of the invention a float controlled valve 32 is mounted in one of the side walls 6 for coupling to a water supply. A float 33 mechanically coupled to the valve 32 by a linkage 34 operates the valve 32 in response to the level of water in the interior region 4 to control the level of water therein.

A partition element, namely, a partition wall 35 is located in the interior region 4 extending between the side walls 6 and divides the interior region 4 into a drinking compartment 37 and an inlet compartment 38 within which the float controlled ball valve 32 is housed. A cover element, namely, a cover 39 extending from the partition wall 35 closes the inlet compartment 38. Screws 40 through the cover 39 engage the opposite side walls 6 to secure the partition wall 35 and the cover 39 in place in the interior region 4 of the bowl 1. The partition wall 35 is spaced apart from the base 2 to facilitate flow of water from the inlet compartment 38 to the drinking compartment 37.

In this embodiment of the invention the drink bowl 1, the partition wall 35 and the cover 39 are of plastics material. The drink bowl 1 is integrally formed in one piece by either injection moulding, rotational moulding or blow moulding. The partition wall 35 and the cover 39 are also formed in one piece by either injection moulding or by bending from a suitable sheet of plastics material.

In use, the drink bowl 1 is secured to a structure, such as a wall of an animal house, by suitable screws, for example, masonry screws or bolts (not shown) through the upper and lower mounting holes 10 and 11 in the rear end wall 8. A water supply is coupled to the float controlled valve 32. With the drink bowl 1 so secured to a wall and coupled to a water supply, the drink bowl 1 is ready for use. The bung 19 is urged into the engaged position in sealable engagement with the communicating bore 15 by gripping the tab 26 between a finger and thumb of a hand of an individual and urging the grip tab 26, and in turn the bung 19 upwardly into tight secure sealable engagement with the communicating bore 15. During urging of the bung 19 into the communicating bore 15, the resilient material of the bung 19 adjacent the ridge 30 of the intermediate portion 29 deforms slightly to ensure tight sealable secure engagement between the bung 19 and the side wall of the communicating bore 15.

When it is desired to drain the interior region 4 of the drink bowl 1 to facilitate cleaning thereof, the bung 19 is disengaged from the communicating bore 15 by either pushing the bung 19 downwardly through the communicating bore 15 by placing a thumb on the distal end 31 of the bung 19 and urging the bung downwardly through the communicating bore 15, or alternatively, by gripping the grip tab 26 and urging the grip tab 26 downwardly, and in turn the bung 19 downwardly out of engagement with the communicating bore 15 and into the disengaged position. On the interior region 4 having been drained and cleaned, the bung 19 is again reengaged in tight sealable engagement with the communicating bore 15 by gripping the grip tab 26, and urging the grip tab 26 upwardly, and in turn the bung 19 upwardly into the communicating bore 15 into tight sealable secure engagement therewith.

The advantages of the invention are many. By virtue of the fact that the bung 19 is engageable in the communicating bore 15 from the exterior of the bowl 1, rather than from the interior region 4 thereof as is the case with drink bowls known heretofore, there is no danger of the bung 19 being displaced by an animal drinking from the drink bowl 1, as is commonly the case with drink bowls known heretofore. Once the bung 19 has been securely engaged in the communicating bore 15, the bung 19 can only be disengaged by pressing down with a significant degree of pressure on the distal end 27 of the bung 19, or on the grip tab 26. This is more than an animal can do due to the configuration and shape of the animal's muzzle. Additionally, by virtue of the fact that the bung 19 is disengageable from the communicating bore 15 by gripping the grip tab 26 externally of the drink bowl 1 and by urging the grip tab 26 downwardly, there is no need for a farmer to put his or her hand into the water in the drink bowl 1 to remove the bung, which has been a problem of drink bowls known heretofore.

The provision of the coupling means coupling the bung 19 to the exterior of the bowl provides a further advantage, in that the bung is not detachable from the bowl, thereby avoiding any danger of the bung being lost. Furthermore, by virtue of the fact that the coupling means maintains the bung 19 in alignment with the communicating bore 15 when the bung 19 is in the disengaged position, the bung is readily easily urgeable into the engaged position from the disengaged position without any need for manual alignment of the bung with the communicating bore. The provision of the bung to be of a resilient material and to define a circumferentially extending ridge which forms an interference fit with the communicating bore provides for good sealing engagement between the bung 19 and the communicating bore 15.

Additionally, by virtue of the construction of the bowl 1, and in particular, the provision of the downwardly extending reinforcing webs 12 from the base 2 which engage the rear end wall 8, the drink bowl 1 is a particularly rigid structure, and cannot be easily broken or detached from the rear end wall 8, as is commonly a problem with drink bowls known heretofore.

While the bung has been described as being of a particular type of deformable resilient material, any other suitable deformable resilient material may be used. Similarly, the coupling member may be of any other suitable material besides a resilient material. It will also, of course, be appreciated that while it is desirable, it is not essential that the bung, the coupling member and the grip tab be integrally moulded in one piece of the same material.

While a particular construction of coupling means has been described, any other suitable coupling means for coupling the bung to the bowl may be provided.

It is also envisaged that instead of the bung defining a circumferentially extending ridge, the bung may be provided with an intermediate portion of cylindrical shape, in other words parallel sided, which itself would preferably be an interference fit in the communicating bore.

While it is desirable, it is not essential that the bung need taper inwardly from the distal tapered lead-in portion to the proximal end. Indeed, in certain cases, it is envisaged that the bung may taper inwardly over its entire length from the proximal end to the distal end. Additionally, it is envisaged that the proximal portion of the bung may be cylindrical, in other words, parallel sided, and only the lead-in portion of the bung 19 would be tapered.

It is also envisaged that the communicating bore may taper inwardly upwardly from the downstream exterior end of the communicating bore to the upstream interior end thereof, and in which case, it is envisaged that the tapering angle of the inwardly tapered lead-in distal end of the bung would be substantially similar to the tapering angle of the communicating bore.

While the bung 19 and the communicating bore 15 have been described as being of circular cross-section, the bung and the communicating bore may be of any suitable cross-section.

While the drink bowl has been described as being of a plastics material, the drink bowl may be of any other suitable material and may be formed by any other suitable forming process.

Additionally, while the drink bowl has been described as being suitable for cattle, the drink bowl may be of any other suitable or desirable size for facilitating drinking by other types of animals. The drink bowl may be larger or smaller than that described.

## Claims

1. A drink bowl having an outlet port for draining liquid therefrom, the outlet port being formed by a communicating bore extending through the bowl from an upstream end adjacent an interior of the bowl to a downstream end adjacent the exterior thereof, a bung for sealably closing the communicating bore, the bung being urgeable inwardly into the communicating bore from the exterior of the bowl in a direction from the downstream end towards the upstream end and being releasably and sealably engageable with the communicating bore, the bung being disengageable from the communicating bore by urging the bung outwardly therefrom towards the exterior of the bowl in a direction from the upstream end towards the downstream end, and a coupling means coupling the bung to the exterior of the bowl for facilitating engagement and disengagement of the bung with and from the communicating bore.

2. A drink bowl as claimed in Claim 1 in which the coupling means constrains the bung to move between an engaged position with the bung sealably engaged in the communicating bore and a disengaged position with the bung disengaged from the communicating bore, and the coupling means maintains the bung in alignment with the communicating bore as the bung is being urged between the disengaged position and the engaged position.

3. A drink bowl as claimed in Claim 1 or 2 in which the coupling means comprises a resilient coupling member.

4. A drink bowl as claimed in any preceding claim in which the coupling means is secured to the bowl adjacent to but spaced apart from the communicating bore.

5. A drink bowl as claimed in any preceding claim in which a mounting means is provided for mounting the coupling means to the drink bowl, the mounting means being located on the exterior of the bowl.

6. A drink bowl as claimed in any preceding claim in which a grip means extends from the bung exteriorly of the bowl for facilitating manual disengagement of the bung from the communicating bore.

7. A drink bowl as claimed in Claim 6 in which the grip means comprises a grip tab configured for gripping between a finger and thumb of one hand of an individual.

8. A drink bowl as claimed in any preceding claim in which the bung comprises a resilient material, and terminates in a distal tapered lead-in for facilitating entry of the bung into the communicating bore.

9. A drink bowl as claimed in Claim 8 in which the bung tapers towards the proximal end thereof to define with the distal tapered lead-in an intermediate portion intermediate the distal tapered lead-in and the tapered proximal end of transverse cross-sectional area greater than the minimum transverse cross-sectional area of the distal tapered lead-in and the tapered proximal end, and the distal tapered lead-in and the tapered proximal end extend from each other to define the intermediate portion of the bung as a ridge extending circumferentially around the bung intermediate the distal tapered lead-in and the tapered proximal end.

10. A drink bowl as claimed in any preceding claim in which the bowl comprises a base, and a wall extending around and in a generally upwardly direction from the base to define with the base the interior of the bowl.

11. A drink bowl as claimed in Claim 10 in which the wall comprises a pair of spaced apart side walls extending along respective opposite sides of the base, a front end wall extending along a front end of the base between the side walls, and a rear end wall extending along a rear end of the base between the side walls, the side walls and the front end wall extend in a generally outwardly upwardly direction from the base, and the rear end wall extends in a generally upwardly direction from the base.

12. A drink bowl as claimed in any preceding claim in which the drink bowl is configured for receiving a water supply, and comprises a float controlled valve for accommodating the water supply into the drink bowl.

13. A drink bowl as claimed in Claim 12 in which a partition element is provided for partitioning the interior of the drink bowl into a drinking compartment and an inlet compartment, the partition element permitting communication between the drinking compartment and the inlet compartment.

14. A drink bowl as claimed in Claim 13 in which a cover element is provided for covering the inlet compartment, the cover element extending from the partition element adjacent a top thereof, and the partition element and the cover element co-operating with the drink bowl for concealing the float controlled valve within the inlet compartment.

15. A method for releasably and sealably closing an outlet port from a drink bowl, the outlet port being formed by a communicating bore extending through the bowl between an upstream end adjacent an interior of the bowl to a downstream end adjacent an exterior of the bowl, the method comprising coupling a bung to the bowl adjacent the exterior thereof, and entering a bung into the communicating bore at the downstream end thereof adjacent the exterior of the bowl, and urging the bung into the communicating bore in a direction from the downstream end towards the upstream end until the bung sealably and releasably engages the communicating bore.
